# EUROPEAN PATENT APPLICATION

(11) **EP 4 596 256 A1**
(43) Date of publication of application: **06.08.2025**
(21) Application number: 25152031.8
(22) Date of filing: 15.01.2025
(51) Int. Cl.: B60C 1/00, C08C 19/22, C08C 19/30, C08L 7/00, C08L 9/06, C08L 15/00

(54) **MODIFIED SILICA, RUBBER COMPOSITION, AND TIRE**

(30) Priority: 02.02.2024 JP 2024014766; 21.10.2024 JP 2024185108
(71) Applicant: Sumitomo Rubber Industries, Ltd., Kobe-shi, Hyogo 651-0072 (JP)
(72) Inventor: JIANG, Lan, Kobe-shi, 651-0072 (JP)
(74) Representative: Manitz Finsterwald Patent- und Rechtsanwaltspartnerschaft mbB

(57) **Abstract**

Provided are a modified silica that exhibits a reversible change with water in the physical properties, and a rubber composition and a tire each containing the modified silica. The present invention relates to a modified silica having been modified with a boronic acid compound.

## Description

### TECHNICAL FIELD

The present invention relates to modified silica, rubber compositions, and tires.

### BACKGROUND ART

In order to improve the fuel economy of tires, addition of silica as a filler has been considered for obtaining good low heat generation properties. Since silica has silanol groups on its surface and is hydrophilic, silica has low compatibility with rubber which is usually hydrophobic. Further, due to the strong self-aggregation properties of silica, uniform dispersion of silica in rubber is not easy.

An exemplary proposed method to increase the dispersibility of silica in rubber compositions includes adding a predetermined amount of an organic group-containing urea compound to a silica-containing diene-based rubber composition (Patent Literature 1).

### CITATION LIST

### PATENT LITERATURE

Patent Literature 1: JP 2006-89693 A

### SUMMARY OF INVENTION

### TECHNICAL PROBLEM

As described above, studies have been conducted from the perspective of the dispersibility of silica. Yet, there is still room for improvement in terms of imparting other various performances to silica.

The present invention aims to solve the problem and provide a modified silica that exhibits a reversible change with water in the physical properties, and a rubber composition and a tire each containing the modified silica.

### SOLUTION TO PROBLEM

The present invention relates to a modified silica having been modified with a boronic acid compound.

### ADVANTAGEOUS EFFECTS OF INVENTION

The present invention provides a modified silica having been modified with a boronic acid compound. Addition of the modified silica to a rubber composition allows the rubber composition to exhibit a reversible change with water in the physical properties.

### BRIEF DESCRIPTION OF DRAWINGS

FIG. 1 shows an exemplary synthetic example of a boronic acid compound-modified silica.
FIGS. 2A and 2B show exemplary ¹³C-NMR spectra of an intermediate product and a synthetic product.
FIG. 3 shows exemplary TGA results of an amine-modified silica and a boronic acid compound-modified silica.
FIG. 4 shows an exemplary synthetic example depicting the synthesis of a phenylboronic acid compound represented by formula (2).
FIG. 5 shows exemplary ¹H-NMR spectra of synthetic products.
FIG. 6 shows an exemplary synthetic example depicting a route to synthesize a modified polymer by reacting a phenylboronic acid compound with a polymer.
FIG. 7 shows exemplary IR spectra and ¹H-NMR spectra of synthetic products, etc.
FIG. 8 shows an exemplary synthetic example of a boronic acid compound-modified silica.
FIG. 9 shows exemplary TGA results of an amine-modified silica and a boronic acid compound-modified silica.
FIG. 10 shows exemplary TGA results of a liquid butadiene polymer and an amine-modified liquid butadiene polymer.

### DESCRIPTION OF EMBODIMENTS

### <Modified silica>

The modified silica having been modified with a boronic acid compound can exhibit a reversible change with water in the physical properties.

The reason for the above-described effect is not exactly clear, but it is believed to be due to the following mechanism.

When a modified silica obtained by reacting silica with a boronic acid compound (a modified silica in which silica is chemically bound to a boronic acid compound) is dried, reversibly, trimolecular dehydration condensation may occur to cause generation of boroxine (boroxine crosslinking) and, upon being in contact with water, the generated boroxine crosslinks may be decomposed. Thus, when dry, silica having boroxine crosslinks is formed, while when swelled with water, the boroxine crosslinks are decomposed, so that the modified silica is formed. Accordingly, the modified silica can exhibit a reversible change with water in the physical properties. Moreover, use of a rubber composition containing the modified silica in, for example, tires may reduce the modulus of elasticity upon being in contact with water, increasing hystericis loss on a wet road surface. Thus, wet grip performance is believed to be improved.

The modified silica is a silica having been modified with a boronic acid compound.

The boronic acid compound may be any compound that has a group including two hydroxyl groups bound to a boron atom. To better achieve the advantageous effect, the boronic acid compound is preferably a boronic acid compound represented by the following formula (1):

R¹-B(OH)₂ (1),

wherein R¹ represents a substituted or unsubstituted monovalent hydrocarbon group.

Examples of the substituted or unsubstituted monovalent hydrocarbon group represented by R¹ in the formula (1) include an alkyl group (with the number of carbon atoms of preferably 1 to 30, more preferably 1 to 20, still more preferably 1 to 10), an alkenyl group (with the number of carbon atoms of preferably 2 to 30, more preferably 2 to 20, still more preferably 2 to 10), an alkynyl group (with the number of carbon atoms of preferably 2 to 30, more preferably 2 to 20, still more preferably 2 to 10), an aryl group (with the number of carbon atoms of preferably 6 to 30, more preferably 6 to 20, still more preferably 6 to 10), and an aralkyl group (with the number of carbon atoms of preferably 7 to 30, more preferably 7 to 20, still more preferably 7 to 10).

In the case of a substituted hydrocarbon group, examples of the substituent include a hydroxyl group, a carboxyl group, an aldehyde group, a ketone group, and a substituted and unsubstituted amino group (in the case of a substituted amino group, the substituent is preferably a C1-C6 alkyl group, more preferably a C1-C3 alkyl group).

To better achieve the advantageous effect, the boronic acid compound is more suitably a phenylboronic acid compound represented by the following formula (2): 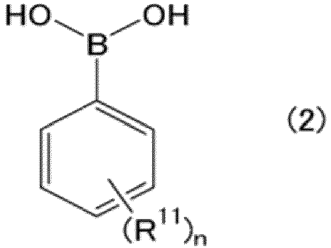 wherein R¹¹(s) may be the same or different and independently represent an optionally substituted monovalent hydrocarbon group which may contain a heteroatom, and n represents an integer of 1 to 5.

Examples of the monovalent hydrocarbon group constituting the backbone of R¹¹ in the formula (2) include linear, cyclic, or branched alkyl, alkenyl, aryl, and aralkyl groups. An alkyl group is particularly preferred among these. The number of carbon atoms of R¹¹ is preferably 1 or more, more preferably 2 or more, still more preferably 3 or more, while it is preferably 30 or less, more preferably 20 or less, still more preferably 10 or less, particularly preferably 6 or less. Specific examples of the monovalent hydrocarbon group include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group.

The substituent in R¹¹ in the formula (2) may be added to the backbone of the monovalent hydrocarbon group constituting the backbone of R¹¹ or may be introduced in the backbone. The substituent is not limited and may be a known group. Examples include C1-C4 alkoxy groups such as a methoxy group, an ethoxy group, and a butoxy group, halogen atoms such as chlorine, bromine, iodine, and fluorine, C6-C12 aryl groups such as a phenyl group, a naphthyl group, and a biphenyl group, and polar groups such as an oxo (=O) group, a hydroxy group, a carboxyl group, a carbonyl group, an aldehyde group, an amino group, an acetyl group, an amide group, an imide group, and a thiol group. From the perspective of the reactivity with polymers, preferred examples of the substituent include a carboxyl group, an aldehyde group, an amino group, and a thiol group.

To better obtain a reversible change with water in the physical properties, the substituent is preferably an oxygen atom-containing group, more preferably a carboxyl group or an aldehyde group, still more preferably an aldehyde group.

Any silica may be used as the silica to be modified with a boronic acid compound in the modified silica.

Non-limiting examples of usable silica include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, etc.).

Amorphous silica extracted from husks may be commercially available from Wilmar, etc.

The nitrogen adsorption specific surface area (N₂SA) of the silica is preferably 10 m²/g or more, more preferably 20 m²/g or more, still more preferably 30 m²/g or more. The upper limit of the N₂SA of the silica is not limited, and it is preferably 300 m²/g or less, more preferably 275 m²/g or less, still more preferably 250 m²/g or less. When the N₂SA is within the range indicated above, tire performances such as wet grip performance tend to be better obtained.

Herein, the N₂SA of silica is measured by a BET method in accordance with ASTM D3037-93.

From the perspective of the reactivity with the boronic acid compound, the silica preferably has a functional group. Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. From the perspective of, for example, the reactivity with the boronic acid compound, an amino group, an epoxy group, a carboxyl group, or the like is preferred, and an amino group is more preferred among these.

The process of the reaction between the boronic acid compound and the silica is not limited and may be performed by known methods. The reaction may be performed in a solvent such as water or an organic solvent or may be performed without solvent. The solvent is not limited and it is preferably a solvent in which the boronic acid compound and the silica are both easily dispersed. The reaction temperature and the reaction time may be appropriately set depending on the boronic acid compound and the silica such that the reaction proceeds. The mixing ratio of the boronic acid compound and the silica used in the reaction may be appropriately selected within a range that allows the reaction to proceed.

The solvent is not limited and may be appropriately selected from those in which the reaction can proceed. Examples of the solvent include ethers such as ethylene glycol dimethyl ether, tetrahydrofuran, and 1,4-dioxane, aromatic hydrocarbons such as toluene, alcohols such as ethanol and methanol, water, and mixtures of these.

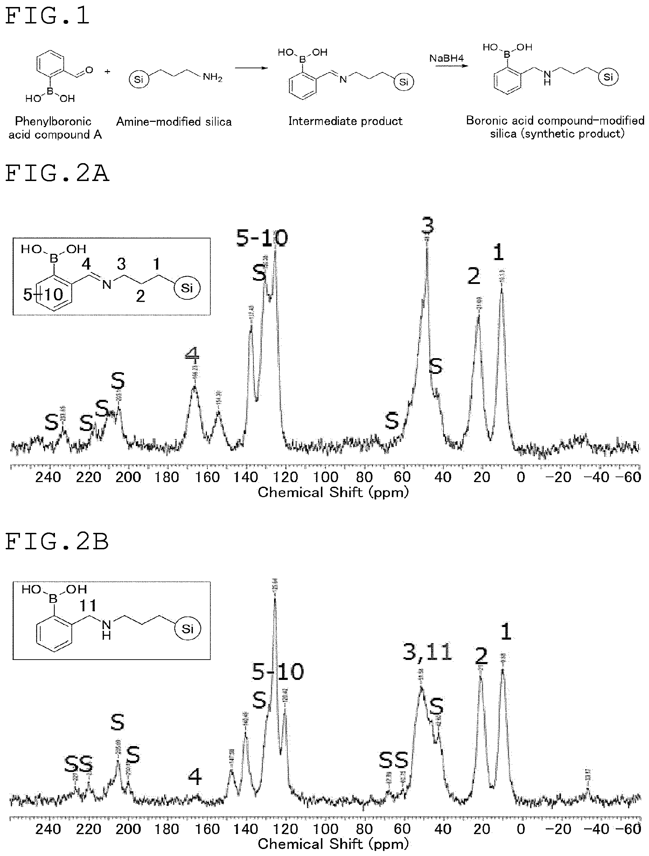

In an exemplary specific synthetic example of compound synthesis, a modified silica (boronic acid compound-modified silica) can be synthesized via the synthetic route shown in FIG. 1.

Specifically, for example as shown in FIG. 1, an aldehyde group-containing boronic acid compound is reacted with an amino group-containing silica (amine-modified silica) in a solvent (methanol) overnight at room temperature, and the reaction product is reduced with sodium borohydride (NaBH₄), whereby a modified silica having been modified with the boronic acid compound (boronic acid compound-modified silica) is synthesized. After the reaction, the modified silica is subjected to suction filtration or the like to collect a filtrate. The filtrate is dried to obtain a target reaction product (boronic acid compound-modified silica).

In FIG. 1, Si denotes silica.

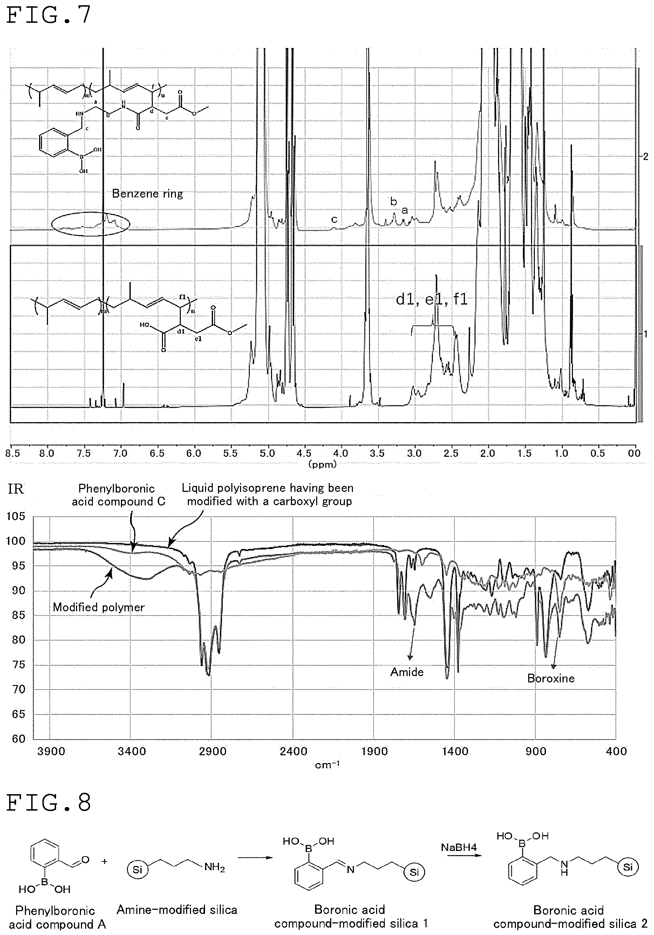

A modified silica 1 (boronic acid compound-modified silica 1) and a modified silica 2 (boronic acid compound-modified silica 2) can be synthesized via the synthetic route shown in FIG. 8. In other words, not only the modified silica 2 (boronic acid compound-modified silica 2), which is a target reaction product of the synthetic route shown in FIG. 1, but also the modified silica 1 (boronic acid compound-modified silica 1), which is an intermediate product, can be used as the modified silica (boronic acid compound-modified silica).

Specifically, for example as shown in FIG. 8, an aldehyde group-containing boronic acid compound is reacted with an amino group-containing silica (amine-modified silica) in a solvent (methanol) overnight at room temperature, whereby the modified silica 1 having been modified with the boronic acid compound (boronic acid compound-modified silica 1) is synthesized. After the reaction, the modified silica 1 is subjected to suction filtration or the like to collect a filtrate. The filtrate is dried to obtain a target reaction product (boronic acid compound-modified silica 1).

Further, the modified silica 1 (boronic acid compound-modified silica 1) is dispersed in a solvent (methanol), and the dispersion is reduced with sodium borohydride (NaBH₄), whereby a modified silica 2 having been modified with the boronic acid compound (boronic acid compound-modified silica 2) is synthesized. After the reaction, the modified silica 2 is subjected to suction filtration or the like to collect a filtrate. The filtrate is dried to obtain a target reaction product (boronic acid compound-modified silica 2) as well.

In FIG. 8, Si denotes silica.

The modified silica desirably has a Shiff base structure, like the modified silica 1 (boronic acid compound-modified silica 1). Examples of the Schiff base structure include an imine structure represented by =C=N-(C and N are independently bound to a hydrogen atom or a hydrocarbon group). Examples of the hydrocarbon group include the monovalent hydrocarbon group described above and a divalent hydrocarbon group described below.

The reason why a modified silica having a Shiff base structure is desirable is not exactly clear, but it is believed to be due to the following mechanism.

A Shiff base with a R¹¹R²¹C=N-R³¹ structure is considered to be responsive to water. Therefore, the modified silica 1 (boronic acid compound-modified silica 1) having a Shiff base can form boroxine (boroxine crosslinking) when water is not present, while both boroxine decomposition and Shiff base decomposition may occur when water is present.

Thus, a modified silica having a Shiff base structure such as the modified silica 1 (boronic acid compound-modified silica 1) is considered to be more responsive to water than a modified silica having no Shiff base structure such as the modified silica 2 (boronic acid compound-modified silica 2). For the above reason, a modified silica having a Shiff base structure is believed to be more desirably used.

### <Rubber composition>

The rubber composition contains a modified silica having been modified with a boronic acid compound and a rubber component. In the case of using the rubber composition, the modified silica having been modified with a boronic acid compound can provide a reversible change with water in the physical properties. The use of the rubber composition in, for example, tire components may reduce the modulus of elasticity upon being in contact with water, increasing hystericis loss on a wet road surface. Thus, wet grip performance is believed to be improved.

The rubber composition contains a rubber component.

Herein, the rubber component contributes to crosslinking and generally corresponds to a polymer component which has a weight average molecular weight (Mw) of 10000 or more and which is not extractable with acetone. The rubber component is solid at 25°C.

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less,. When the weight average molecular weight is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the rubber component include a diene-based rubber. Examples of the diene-based rubber include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include butyl-based rubbers and fluororubbers. Modified or hydrogenated products of these rubber components are also usable. Rubbers extended with oils, resins, liquid rubber components, etc. are usable as well. Each of these may be used alone, or two or more of these may be used in combination. Of these, the rubber component preferably includes at least one of an isoprene-based rubber, BR, and SBR, more preferably includes at least one of BR and SBR, still more preferably includes at least BR and SBR.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified or modified BR. Examples of the modified BR include those into which the functional groups listed for the modified rubbers have been introduced. The BR may also be hydrogenated polybutadiene polymers (hydrogenated BR).

Usable commercial products of the BR may be available from UBE Corporation, JSR Corporation, Asahi Kasei Corporation, Zeon Corporation, etc.

Any SBR may be used. Examples include emulsion-polymerized styrene-butadiene rubbers (E-SBR) and solution-polymerized styrene-butadiene rubbers (S-SBR). Each of these may be used alone or in combinations of two or more thereof.

The styrene content of the SBR is preferably 5% by mass or higher, more preferably 20% by mass or higher, still more preferably 24% by mass or higher, further preferably 27.5% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by ¹H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25) / (85 + 5)).

The vinyl bond content of the SBR is preferably 3% by mass or higher, more preferably 10% by mass or higher, still more preferably 17% by mass or higher. The vinyl bond content is preferably 70% by mass or lower, more preferably 65% by mass or lower, still more preferably 60% by mass or lower, further preferably 59% by mass or lower. When the vinyl bond content is within the range indicated above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either an unmodified SBR or a modified SBR. Examples of the modified SBR include those into which the functional groups listed for the modified rubbers have been introduced. The SBR may also be hydrogenated styrene-butadiene copolymers (hydrogenated SBR).

The SBR may be a SBR product manufactured or sold by Sumitomo Chemical Co., Ltd., JSR Corporation, Asahi Kasei Corporation, Zeon Corporation, etc. or may be SBR synthesized by a known method.

The materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the ¹⁴C content of a sample to the ¹⁴C content of a modern carbon standard (modern standard reference). This value is used as an index indicative of the biomass ratio of a compound. The following will describe what this value means.

One mole of carbon atoms (6.02 × 10²³ carbon atoms) includes about 6.02 × 10^{11 14}C atoms (about one trillionth of the number of normal carbon atoms). ¹⁴C is called a radioactive isotope and its half-life period is 5730 years and the number thereof regularly decreases. Decay of all the ¹⁴C atoms requires 226000 years. This means that in the fossil fuels, such as coal, petroleum, and natural gas, which are considered to be left for at least 226000 years after carbon dioxide and the like in the air were taken into and fixed in plants, etc., all the ¹⁴C atoms which had been contained in the plants etc. at the beginning of the fixation were decayed. Therefore, in the current 21st century, the fossil fuels, such as coal, petroleum, and natural gas, contain no ¹⁴C atoms. Thus, chemical materials prepared from such fossil fuel raw materials contain no ¹⁴C atoms either.

Meanwhile, ¹⁴C is unceasingly generated by nuclear reaction of cosmic rays in the air, and this generation balances with the ¹⁴C reduction due to radioactive decay. Thus, in the global atmosphere, the amount of ¹⁴C is constant. Then, the ¹⁴C content of materials derived from biomass resources which are circulating in the current environment is about 1 × 10⁻¹² mol% of the total of C atoms as described above. Therefore, a difference in the values can be used to calculate the biomass ratio of a compound.

The amount of ¹⁴C is generally determined as follows. ¹³C content (¹³C/¹²C) and ¹⁴C content (¹⁴C/¹²C) are determined by tandem accelerator-based mass spectrometry. In the determination, the ¹⁴C content of the natural carbon cycle at 1950 is used as a modern standard reference, that is, a standard ¹⁴C content. The particular standard substance used is an oxalic acid standard offered by the National Institute of Standards and Technology (NIST), United States. The specific radioactivity of carbon (intensity of radioactivity of ¹⁴C per gram of carbon) in the oxalic acid is corrected for carbon isotopic fractionation to a certain value for ¹³C, and is then corrected for decay between 1950 AD and the measurement date. This corrected value is taken as the standard ¹⁴C content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured ¹⁴C content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The amount of the isoprene-based rubber as a rubber component, if present, in the rubber composition based on 100% by mass of the rubber component is preferably 5% by mass or more, more preferably 10% by mass or more, still more preferably 15% by mass or more. The amount may be 100% by mass, but it is preferably 80% by mass or less, more preferably 70% by mass or less, still more preferably 60% by mass or less. When the amount is within the range indicated above, the advantageous effect tends to be better achieved.

The amount of the BR, if present, in the rubber composition based on 100% by mass of the rubber component is preferably 30% by mass or more, more preferably 40% by mass or more, still more preferably 50% by mass or more, while it is preferably 90% by mass or less, more preferably 80% by mass or less, still more preferably 70% by mass or less. When the amount is within the range indicated above, the advantageous effect tends to be better achieved.

The amount of the SBR, if present, in the rubber composition based on 100% by mass of the rubber component is preferably 30% by mass or more, more preferably 40% by mass or more, still more preferably 50% by mass or more, while it is preferably 90% by mass or less, more preferably 80% by mass or less, still more preferably 70% by mass or less. When the amount is within the range indicated above, the advantageous effect tends to be better achieved.

In particular, the rubber component preferably includes a modified rubber having been modified with a boronic acid compound.

To better achieve the advantageous effect, the boronic acid compound is preferably a boronic acid compound represented by the formula (1). Preferred embodiments of the formula (1) are as described above.

The reason for the above-described effect is not exactly clear, but it is believed to be due to the following mechanism.

When a modified rubber obtained by reacting a rubber with a boronic acid compound is dried, reversibly, trimolecular dehydration condensation may occur to cause generation of boroxine (boroxine crosslinking) and, upon being in contact with water, the generated boroxine crosslinks may be decomposed. Thus, when dry, a rubber having boroxine crosslinks is formed, while when swelled with water, the boroxine crosslinks are decomposed, so that the modified rubber is formed. Accordingly, the modified rubber as well as the modified silica can exhibit a reversible change with water in the physical properties. Moreover, for example, use of a rubber composition containing the modified rubber in, for example, tires may reduce the modulus of elasticity upon being in contact with water, further increasing hystericis loss on a wet road surface. Thus, wet grip performance is believed to be further improved.

To better achieve the advantageous effect more, the boronic acid compound is more suitably a phenylboronic acid compound represented by the following formula (2): 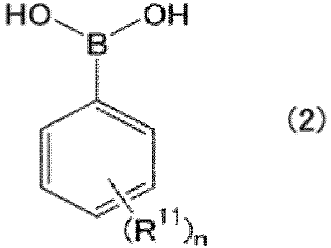 wherein R¹¹(s) may be the same or different and independently represent an optionally substituted monovalent hydrocarbon group which may contain a heteroatom, and n represents an integer of 1 to 5.

Examples of the monovalent hydrocarbon group constituting the backbone of R¹¹ in the formula (2) include linear, cyclic, or branched alkyl, alkenyl, aryl, and aralkyl groups. An alkyl group is particularly preferred among these. The number of carbon atoms of R¹¹ is preferably 1 or more, more preferably 2 or more, still more preferably 3 or more, while it is preferably 30 or less, more preferably 20 or less, still more preferably 10 or less, particularly preferably 6 or less. Specific examples of the monovalent hydrocarbon group include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group.

The substituent in R¹¹ in the formula (2) may be added to the backbone of the monovalent hydrocarbon group constituting the backbone of R¹¹ or may be introduced in the backbone. The substituent is not limited and may be a known group. Examples include C1-C4 alkoxy groups such as a methoxy group, an ethoxy group, and a butoxy group, halogen atoms such as chlorine, bromine, iodine, and fluorine, C6-C12 aryl groups such as a phenyl group, a naphthyl group, and a biphenyl group, and polar groups such as an oxo (=O) group, a hydroxy group, a carboxyl group, a carbonyl group, an amino group, an acetyl group, an amide group, an imide group, and a thiol group. From the perspective of the reactivity with polymers, preferred examples of the substituent include a carboxyl group, an amino group, and a thiol group.

To better obtain a reversible change with water in the physical properties, the substituent is preferably a nitrogen atom-containing group, more preferably an amino group.

The reason for the above-described effect is not exactly clear, but it is believed to be due to the following mechanism.

As described above, when a modified rubber having been reacted with a phenylboronic acid compound represented by the formula (2) is dried, reversibly, trimolecular dehydration condensation may occur to cause generation of boroxine (boroxine crosslinking) and, upon being in contact with water, the generated boroxine crosslinks may be decomposed. Thus, a reversible change with water in the physical properties may be obtained. After normal phenylboroxine is hydrolyzed, heating is necessary to cause trimolecular dehydration condensation. In contrast, a nitrogen atom-containing phenylboronic acid compound, in particular, a phenylboronic acid compound in which a nitrogen atom is in the vicinity of a phenylboroxine group, can undergo trimolecular dehydration condensation even at room temperature. Thus, use of a modified rubber having been reacted with a phenylboronic acid compound represented by the formula (2) is believed to better provide a reversible change with water in the physical properties.

From the perspective of obtaining a reversible change with water in the physical properties, when R¹¹ contains a nitrogen atom in the formula (2), the nitrogen atom is preferably bound to a boron atom in the phenylboronic acid compound represented by the formula (2) via one to six carbon atoms. The number of carbon atoms therebetween is preferably two to five, more preferably two to four, still more preferably two or three.

Examples of the amino group as a substituent in R¹¹ include primary amino groups (-NH₂), secondary amino groups (-NHR¹), and tertiary amino groups (-NR¹R²). Examples of R¹ and R² include an alkyl group, a phenyl group, and an aralkyl group. The carbon number of R¹ and R² is preferably one to eight. The amino group may be in the form of an ammonium base such as a tertiary ammonium base or a quaternary ammonium base. The amino group may be a divalent amino group. Examples of the divalent amino group include -N(H)- and -N(R³). Examples of R³ include an alkyl group, a phenyl group, and an aralkyl group. The carbon number of R³ is preferably one to eight. When the amino group is a divalent amino group, it is introduced in the backbone of R¹¹, for example.

Examples of the heteroatom in R¹¹ include a nitrogen atom, an oxygen atom, and a sulfur atom. To better achieve the advantageous effect, a nitrogen atom is preferred among these.

To better achieve the advantageous effect, n in the formula (2) is preferably 1 to 4, more preferably 1 to 3, still more preferably 1 or 2, particularly preferably 1.

To better achieve the advantageous effect, the phenylboronic acid compound represented by the formula (2) is suitably a compound represented by the following formula (2-1) : 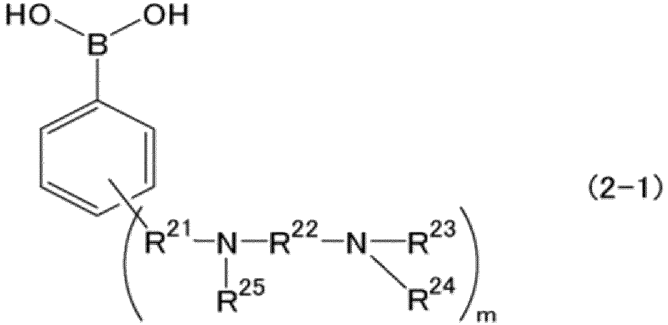 wherein R²¹ and R²² may be the same or different and independently represent an optionally substituted divalent hydrocarbon group which may contain a heteroatom, R²³ to R²⁵ may be the same or different and independently represent a hydrogen atom or an optionally substituted monovalent hydrocarbon group which may contain a heteroatom, and m represents an integer of 1 to 5.

The reason for the above-described effect is not exactly clear, but it is believed to be due to the following mechanism.

As described above, after normal phenylboroxine is hydrolyzed, heating is necessary to cause trimolecular dehydration condensation. In contrast, a phenylboronic acid compound represented by the formula (2-1) in particular can undergo trimolecular dehydration condensation even at room temperature. Thus, use of a modified rubber having been reacted with a compound represented by the formula (2-1) is believed to better provide a reversible change with water in the physical properties.

The divalent hydrocarbon group constituting the backbone of R²¹ and R²² in the formula (2-1) may be linear, cyclic, or branched, and examples include an alkylene group, an alkenylene group, a cycloalkylene group, a cycloalkyl alkylene group, an arylene group, and an aralkylene group. The carbon number of R²¹ and R²² is preferably 1 to 30, more preferably 1 to 15, still more preferably 1 to 8, particularly preferably 1 to 5. Specific examples of the divalent hydrocarbon group include a methylene group, an ethylene group, a trimethylene group, a tetramethylene group, a pentamethylene group, and a hexamethylene group.

The substituents in R²¹ and R²² may be added to the backbones of the divalent hydrocarbon groups constituting the backbones of R²¹ and R²², respectively, or may be introduced in the backbones. The substituents are not limited, and examples include the substituents in R¹¹. Examples of the heteroatoms in R²¹ and R²² include the heteroatoms in R¹¹.

Examples of the monovalent hydrocarbon groups constituting the backbones of R²³ to R²⁵ include the monovalent hydrocarbon groups constituting the backbone of R¹¹. The substituents in R²³ to R²⁵ may be added to the backbones of the monovalent hydrocarbon groups constituting the backbones of R²³ to R²⁵, respectively, or may be introduced in the backbones. The substituents are not limited, and examples include the substituent in R¹¹. Examples of the heteroatoms in R²³ to R²⁵ include the heteroatoms in R¹¹.

To better achieve the advantageous effect, R²³ is preferably a hydrogen atom or a monovalent hydrocarbon group, more preferably a hydrogen atom.

To better achieve the advantageous effect, R²⁴ is preferably a hydrogen atom or a monovalent hydrocarbon group, more preferably a hydrogen atom.

To better achieve the advantageous effect, R²⁵ is preferably a hydrogen atom or a monovalent hydrocarbon group, more preferably a hydrogen atom.

To better achieve the advantageous effect, m in the formula (2-1) is preferably 1 to 4, more preferably 1 to 3, still more preferably 1 or 2, particularly preferably 1.

The phenylboronic acid compound represented by the formula (2) can be synthesized in accordance with known methods. An exemplary synthetic method of the phenylboronic acid compound is described below. Yet, the phenylboronic acid compound is not limited to those obtained by the synthetic method and includes compounds synthetized by any synthetic method that can synthesize the phenylboronic acid compound.

For example, the phenylboronic acid compound represented by the formula (2) can be synthesized by reacting a prescribed phenylboronic acid compound with a compound which can introduce a group represented by R¹¹.

The reaction is usually performed in a solvent.

The solvent used in the reaction is not limited and may be appropriately selected from those in which the reaction can proceed. Examples of the solvent include ethers such as ethylene glycol dimethyl ether, tetrahydrofuran, and 1,4-dioxane, aromatic hydrocarbons such as toluene, water, and mixtures of these. A known catalyst may be appropriately used in the reaction. Examples of the catalyst include palladium catalysts. The amount of the catalyst used in the reaction may be appropriately selected. The mixing ratio of the phenylboronic acid compound and the compound which can introduce a group represented by R¹¹ may be appropriately selected within the range in which the reaction can proceed. The reaction temperature is usually 50°C to 110°C. The reaction time is usually one to 24 hours. After the completion of the reaction, a target substance can be separated in an appropriate post treatment, for example, by extracting the reaction mixture with an organic solvent and then condensing the organic phase. If necessary, the target substance may be further purified by recrystallization, chromatography, or other techniques.

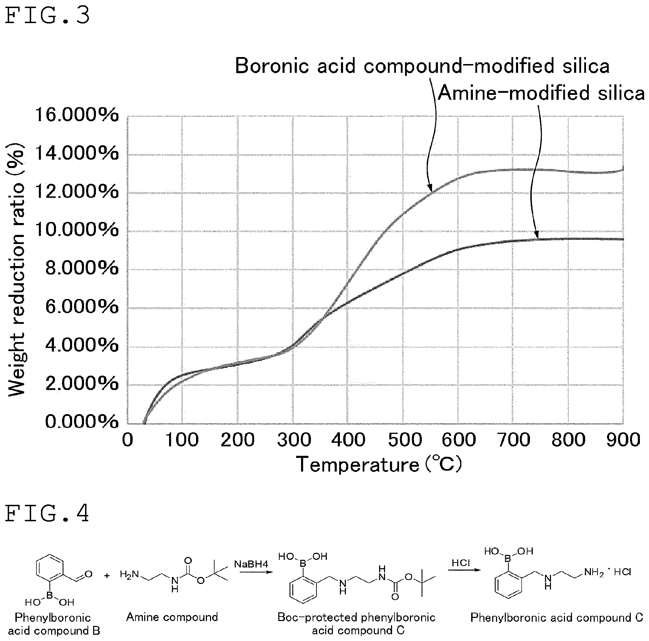

In an exemplary specific synthetic example, a phenylboronic acid compound C can be synthesized via the synthetic route shown in FIG. 4.

For example, the phenylboronic acid compound C is synthesized via the route shown in FIG. 4. The route involves reaction of a phenylboronic acid compound B with an amine compound in a solvent (methanol) at room temperature overnight, reduction with sodium borohydride (NaBH₄), and removing tert-butoxy carbonyl group (Boc) protection with hydrochloric acid (HCl).

Examples of the rubber constituting the backbone of the modified rubber include those described above for the rubber component. From the perspective of the reactivity with a phenylboronic acid compound represented by the formula (2), the rubber is preferably a rubber containing a functional group. Examples of the functional group include those described above. Preferred among these are an epoxy group, an amino group, or a carboxyl group.

The process of the reaction between the boronic acid compound (in particular, a phenylboronic acid compound represented by the formula (2)) and the rubber is not limited and may be performed by known methods. The reaction may be performed in a solvent such as water or an organic solvent or may be performed without solvent. The solvent is not limited and it is preferably a solvent in which the boronic acid compound and the rubber are both easily dissolved. Specific examples of the solvent include those described above. The reaction temperature and the reaction time may be appropriately set depending on the boronic acid compound and the rubber such that the reaction proceeds.

In the case where the rubber component includes a modified rubber having been modified with a boronic acid compound, the amount of the modified rubber having been modified with a boronic acid compound based on 100% by mass of the rubber component is not limited. Yet, the amount is preferably 1% by mass or more, more preferably 3% by mass or more, still more preferably 5% by mass or more. The upper limit is not limited but it is preferably 70% by mass or less, more preferably 50% by mass or less, still more preferably 30% by mass or less. When the amount is within the range indicated above, the advantageous effect tends to be suitably achieved.

The rubber composition contains a modified silica having been modified with a boronic acid compound. The modified silica is as described above.

The amount of the modified silica per 100 parts by mass of the rubber component is preferably 5 parts by mass or more, more preferably 10 parts by mass or more, still more preferably 15 parts by mass or more, further preferably 20 parts by mass or more, further preferably 25 parts by mass or more, further preferably 30 parts by mass or more, further preferably 60 parts by mass or more. The amount per 100 parts by mass of the rubber component is preferably 100 parts by mass or less, more preferably 90 parts by mass or less, still more preferably 85 parts by mass or less, further preferably 80 parts by mass or less, further preferably 75 parts by mass or less. When the amount is within the range indicated above, the advantageous effect tends to be better achieved.

The rubber composition may contain other fillers which are different from the modified silica.

Non-limiting examples of such other fillers include materials known in the rubber field, including inorganic fillers such as carbon black, silica other than the modified silica, calcium carbonate, talc, alumina, clay, aluminum hydroxide, aluminum oxide, and mica; bio chars; and hard-to-disperse fillers. To better achieve the advantageous effect, carbon black and silica other than the modified silica are preferred among these.

The amount of fillers (total amount of fillers such as carbon black, the modified silica, and silica other than the modified silica) per 100 parts by mass of the rubber component in the rubber composition is preferably 10 parts by mass or more, more preferably 20 parts by mass or more, still more preferably 30 parts by mass or more, further preferably 31 parts by mass or more, further preferably 66 parts by mass or more, while it is preferably 200 parts by mass or less, more preferably 150 parts by mass or less, still more preferably 100 parts by mass or less, further preferably 90 parts by mass or less, further preferably 81 parts by mass or less. When the amount is within the range indicated above, the advantageous effect tends to be better achieved.

Non-limiting examples of usable carbon black include N134, N110, N220, N234, N219, N339, N330, N326, N351, N550, and N762. The material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. Each of these may be used alone, or two or more of these may be used in combination.

The nitrogen adsorption specific surface area (N₂SA) of the carbon black is preferably 5 m²/g or more, more preferably 30 m²/g or more, still more preferably 50 m²/g or more. The N₂SA is preferably 200 m²/g or less, more preferably 114 m²/g or less, still more preferably 100 m²/g or less, further preferably 90 m²/g or less. When the N₂SA is within the range indicated above, the advantageous effect tends to be better achieved.

The nitrogen adsorption specific surface area of the carbon black may be determined in accordance with JIS K 6217-2:2001.

The amount of the carbon black per 100 parts by mass of the rubber component in the rubber composition is preferably 1 part by mass or more, more preferably 3 parts by mass or more, still more preferably 5 parts by mass or more, further preferably 6 parts by mass or more, while it is preferably 50 parts by mass or less, more preferably 40 parts by mass or less, still more preferably 30 parts by mass or less. When the amount is within the range indicated above, the advantageous effect tends to be better achieved.

Non-limiting examples of usable silica other than the modified silica include the silica to be modified with a boronic acid compound described for the modified silica.

The amount of the silica other than the modified silica per 100 parts by mass of the rubber component in the rubber composition is preferably 1 part by mass or more, more preferably 3 parts by mass or more, still more preferably 5 parts by mass or more, while it is preferably 50 parts by mass or less, more preferably 40 parts by mass or less, still more preferably 30 parts by mass or less. When the amount is within the range indicated above, the advantageous effect tends to be better achieved.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 µm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The rubber composition preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Evonik, Momentive, Shin-Etsu Silicone, Tokyo Chemical Industry Co., Ltd., AZmax. Co., Dow Corning Toray Co., Ltd., etc. Each of these may be used alone, or two or more of these may be used in combination.

The amount of silane coupling agents per 100 parts by mass of the silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition may contain a plasticizer.

Herein, the term "plasticizer" refers to a material that imparts plasticity to rubber components and conceptually includes both liquid plasticizers that are liquid at 25°C and solid plasticizers that are solid at 25°C. Examples of the plasticizer include resin components, oils, liquid polymers, and ester plasticizers. These plasticizers may be derived from mineral resources such as petroleum or natural gas, from biomass, or from naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, the term "mineral oils" refers to oils derived from mineral resources such as petroleum or natural gas. Examples of mineral oils include paraffinic process oils (mineral oils), naphthenic process oils, and aromatic process oils. Specific examples of mineral oils include mild extracted solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether a rubber composition contains the acylglycerol may be examined by any method such as ¹H-NMR analysis. For example, a rubber composition containing triacylglycerol is immersed in deuterium chloroform at 25°C for 24 hours. After removing the rubber composition, the ¹H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably 1.0 × 10³ to 5.0 × 10⁴, more preferably 3.0 × 10³ to 1.5 × 10⁴ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins that are usually used as additives for tires. They may be either liquid or solid at 25°C. Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at 25°C, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at 25°C is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

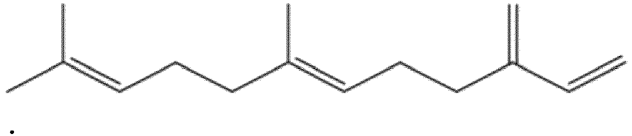

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at 25°C may be used. Of these, liquid farnesene polymers that are liquid at 25°C are desirable.

The amount of plasticizers (total amount of plasticizers) per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The amount of plasticizers includes the amount of oils or resins contained in oil-extended rubbers or resin-extended rubbers.

The amount of solid plasticizers that are solid at 25°C per 100 parts by mass of the rubber component in the rubber composition is preferably 1 part by mass or more, more preferably 3 parts by mass or more, still more preferably 4 parts by mass or more. The upper limit is preferably 30 parts by mass or less, more preferably 20 parts by mass or less, still more preferably 10 parts by mass or less. When the amount is within the range indicated above, the advantageous effect tends to be better achieved.

The amount of solid resins that are solid at 25°C per 100 parts by mass of the rubber component in the rubber composition is preferably 1 part by mass or more, more preferably 3 parts by mass or more, still more preferably 4 parts by mass or more. The upper limit is preferably 30 parts by mass or less, more preferably 20 parts by mass or less, still more preferably 10 parts by mass or less. When the amount is within the range indicated above, the advantageous effect tends to be better achieved.

The amount of liquid plasticizers that are liquid at 25°C per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of oils per 100 parts by mass of the rubber component in the rubber composition is preferably 1 part by mass or more, more preferably 3 parts by mass or more, still more preferably 4 parts by mass or more. The upper limit is preferably 30 parts by mass or less, more preferably 20 parts by mass or less, still more preferably 10 parts by mass or less. When the amount is within the range indicated above, the advantageous effect tends to be better achieved.

The amount of oils includes the amount of oils in oil-extended rubbers.

In particular, the rubber composition preferably includes a modified polymer having been modified with a boronic acid compound.

To better achieve the advantageous effect, the boronic acid compound is preferably a boronic acid compound represented by the formula (1). Preferred embodiments of the formula (1) are as described above.

The reason for the above-described effect is not exactly clear, but it is believed to be due to the following mechanism.

When a modified polymer obtained by reacting a polymer with a boronic acid compound is dried, reversibly, trimolecular dehydration condensation may occur to cause generation of boroxine (boroxine crosslinking) and, upon being in contact with water, the generated boroxine crosslinks may be decomposed. Thus, when dry, a polymer having boroxine crosslinks is formed, while when swelled with water, the boroxine crosslinks are decomposed, so that the modified polymer is formed. Accordingly, the modified polymer as well as the modified silica can exhibit a reversible change with water in the physical properties. Moreover, for example, use of a rubber composition containing the modified polymer in, for example, tires may reduce the modulus of elasticity upon being in contact with water, further increasing hystericis loss on a wet road surface. Thus, wet grip performance is believed to be further improved.

To better achieve the advantageous effect more, the boronic acid compound is suitably a phenylboronic acid compound represented by the following formula (2): 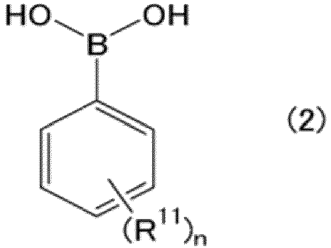 wherein R¹¹(s) may be the same or different and independently represent an optionally substituted monovalent hydrocarbon group which may contain a heteroatom, and n represents an integer of 1 to 5.

Examples of the monovalent hydrocarbon group constituting the backbone of R¹¹ in the formula (2) include linear, cyclic, or branched alkyl, alkenyl, aryl, and aralkyl groups. An alkyl group is particularly preferred among these. The number of carbon atoms of R¹¹ is preferably 1 or more, more preferably 2 or more, still more preferably 3 or more, while it is preferably 30 or less, more preferably 20 or less, still more preferably 10 or less, particularly preferably 6 or less. Specific examples of the monovalent hydrocarbon group include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group.

The substituent in R¹¹ in the formula (2) may be added to the backbone of the monovalent hydrocarbon group constituting the backbone of R¹¹ or may be introduced in the backbone. The substituent is not limited and may be a known group. Examples include C1-C4 alkoxy groups such as a methoxy group, an ethoxy group, and a butoxy group, halogen atoms such as chlorine, bromine, iodine, and fluorine, C6-C12 aryl groups such as a phenyl group, a naphthyl group, and a biphenyl group, and polar groups such as an oxo (=O) group, a hydroxy group, a carboxyl group, a carbonyl group, an amino group, an acetyl group, an amide group, an imide group, and a thiol group. From the perspective of the reactivity with polymers, preferred examples of the substituent include a carboxyl group, an amino group, and a thiol group.

To better obtain a reversible change with water in the physical properties, the substituent is preferably a nitrogen atom-containing group, more preferably an amino group.

The reason for the above-described effect is not exactly clear, but it is believed to be due to the following mechanism.

As described above, when a modified polymer having been reacted with a phenylboronic acid compound represented by the formula (2) is dried, reversibly, trimolecular dehydration condensation may occur to cause generation of boroxine (boroxine crosslinking) and, upon being in contact with water, the generated boroxine crosslinks may be decomposed. Thus, a reversible change with water in the physical properties may be obtained. After normal phenylboroxine is hydrolyzed, heating is necessary to cause trimolecular dehydration condensation. In contrast, a nitrogen atom-containing phenylboronic acid compound, in particular, a phenylboronic acid compound in which a nitrogen atom is in the vicinity of a phenylboroxine group, can undergo trimolecular dehydration condensation even at room temperature. Thus, use of a modified polymer having been reacted with a phenylboronic acid compound represented by the formula (2) is believed to better provide a reversible change with water in the physical properties.

From the perspective of obtaining a reversible change with water in the physical properties, when R¹¹ contains a nitrogen atom in the formula (2), the nitrogen atom is preferably bound to a boron atom in the phenylboronic acid compound represented by the formula (2) via one to six carbon atoms. The number of carbon atoms therebetween is preferably two to five, more preferably two to four, still more preferably two or three.

Examples of the amino group as a substituent in R¹¹ include primary amino groups (-NH₂), secondary amino groups (-NHR¹), and tertiary amino groups (-NR¹R²). Examples of R¹ and R² include an alkyl group, a phenyl group, and an aralkyl group. The carbon number of R¹ and R² is preferably one to eight. The amino group may be in the form of an ammonium base such as a tertiary ammonium base or a quaternary ammonium base. The amino group may be a divalent amino group. Examples of the divalent amino group include -N(H)- and -N(R³). Examples of R³ include an alkyl group, a phenyl group, and an aralkyl group. The carbon number of R³ is preferably one to eight. When the amino group is a divalent amino group, it is introduced in the backbone of R¹¹, for example.

Examples of the heteroatom in R¹¹ include a nitrogen atom, an oxygen atom, and a sulfur atom. To better achieve the advantageous effect, a nitrogen atom is preferred among these.

To better achieve the advantageous effect, n in the formula (2) is preferably 1 to 4, more preferably 1 to 3, still more preferably 1 or 2, particularly preferably 1.

To better achieve the advantageous effect, the phenylboronic acid compound represented by the formula (2) is suitably a compound represented by the following formula (2-1) : 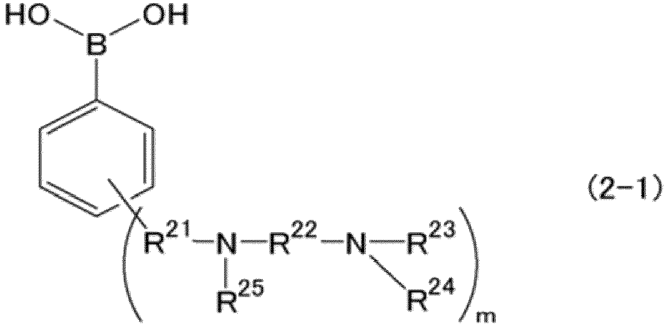 wherein R²¹ and R²² may be the same or different and independently represent an optionally substituted divalent hydrocarbon group which may contain a heteroatom, R²³ to R²⁵ may be the same or different and independently represent a hydrogen atom or an optionally substituted monovalent hydrocarbon group which may contain a heteroatom, and m represents an integer of 1 to 5.

The reason for the above-described effect is not exactly clear, but it is believed to be due to the following mechanism.

As described above, after normal phenylboroxine is hydrolyzed, heating is necessary to cause trimolecular dehydration condensation. In contrast, a phenylboronic acid compound represented by the formula (2-1) in particular can undergo trimolecular dehydration condensation even at room temperature. Thus, use of a modified polymer having been reacted with a compound represented by the formula (2-1) is believed to better provide a reversible change with water in the physical properties.

The divalent hydrocarbon group constituting the backbone of R²¹ and R²² in the formula (2-1) may be linear, cyclic, or branched, and examples include an alkylene group, an alkenylene group, a cycloalkylene group, a cycloalkyl alkylene group, an arylene group, and an aralkylene group. The carbon number of R²¹ and R²² is preferably 1 to 30, more preferably 1 to 15, still more preferably 1 to 8, particularly preferably 1 to 5. Specific examples of the divalent hydrocarbon group include a methylene group, an ethylene group, a trimethylene group, a tetramethylene group, a pentamethylene group, and a hexamethylene group.

The substituents in R²¹ and R²² may be added to the backbones of the divalent hydrocarbon groups constituting the backbones of R²¹ and R²², respectively, or may be introduced in the backbones. The substituents are not limited, and examples include the substituents in R¹¹. Examples of the heteroatoms in R²¹ and R²² include the heteroatoms in R¹¹.

Examples of the monovalent hydrocarbon groups constituting the backbones of R²³ to R²⁵ include the monovalent hydrocarbon groups constituting the backbone of R¹¹. The substituents in R²³ to R²⁵ may be added to the backbones of the monovalent hydrocarbon groups constituting the backbones of R²³ to R²⁵, respectively, or may be introduced in the backbones. The substituents are not limited, and examples include the substituent in R¹¹. Examples of the heteroatoms in R²³ to R²⁵ include the heteroatoms in R¹¹.

To better achieve the advantageous effect, R²³ is preferably a hydrogen atom or a monovalent hydrocarbon group, more preferably a hydrogen atom.

To better achieve the advantageous effect, R²⁴ is preferably a hydrogen atom or a monovalent hydrocarbon group, more preferably a hydrogen atom.

To better achieve the advantageous effect, R²⁵ is preferably a hydrogen atom or a monovalent hydrocarbon group, more preferably a hydrogen atom.

To better achieve the advantageous effect, m in the formula (2-1) is preferably 1 to 4, more preferably 1 to 3, still more preferably 1 or 2, particularly preferably 1.

The polymer constituting the backbone of the modified polymer may be a liquid polymer (e.g., liquid resins, liquid diene polymers, liquid farnesene polymers) that is liquid at 25°C. Examples of the liquid polymer include those described above.

The polymer may be a resin (resin that is solid at 25°C) .

Examples of the resin (resin that is solid at 25°C) include those described above.

From the perspective of the reactivity with a phenylboronic acid compound represented by the formula (2), the polymer is preferably a polymer containing a functional group. Examples of the functional group include those described above. Preferred among these are an epoxy group, an amino group, or a carboxyl group.

The process of the reaction between the boronic acid compound (in particular, a phenylboronic acid compound represented by the formula (2)) and the polymer is not limited and may be performed by known methods. The reaction may be performed in a solvent such as water or an organic solvent or may be performed without solvent. The solvent is not limited and it is preferably a solvent in which the boronic acid compound and the polymer are both easily dissolved. Specific examples of the solvent include those described above. The reaction temperature and the reaction time may be appropriately set depending on the boronic acid compound and the polymer such that the reaction proceeds.

The reaction between the boronic acid compound and the polymer may be allowed to proceed by mixing the boronic acid compound, the polymer, and optionally other components. Such a reaction can also generate a modified polymer having been modified with a boronic acid compound.

The modified polymer may be either a modified polymer that is solid at 25°C or a modified polymer that is liquid at 25°C.

Examples of the modified polymer that is solid at 25°C include modified polymers obtained by modifying polymers that are solid at room temperature (25°C) such as the resin described above.

Examples of the modified polymer that is liquid at 25°C include modified polymers obtained by modifying liquid polymers that are liquid at room temperature (25°C) such as the liquid resins, liquid diene polymers, and liquid farnesene polymers described above.

The amount of the modified polymer having been modified with a boronic acid compound per 100 parts by mass of the rubber component in the rubber composition is preferably 1 part by mass or more, more preferably 5 parts by mass or more, still more preferably 10 parts by mass or more, further preferably 12.7 parts by mass or more, further preferably 15 parts by mass or more, further preferably 20 parts by mass or more. The upper limit is preferably 50 parts by mass or less, more preferably 40 parts by mass or less, still more preferably 30 parts by mass or less. When the amount is within the range indicated above, the advantageous effect tends to be better achieved.

In generation of the modified polymer having been modified with the boronic acid compound by kneading the boronic acid compound with the polymer in the rubber composition, the amount of the modified polymer having been modified with the boronic acid compound in the rubber composition may be considered as a sum of the boronic acid compound and the polymer both fed in the rubber composition.

The rubber composition may further contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, etc.

The amount of vulcanized rubber particles per 100 parts by mass of the rubber component in the rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effect tends to be better achieved.

In view of crack resistance, ozone resistance, etc., the rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3' ,5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the rubber composition is preferably 0.2 parts by mass or more, more preferably 2.0 parts by mass or more, still more preferably 2.8 parts by mass or more, further preferably 3.4 parts by mass or more. The amount is preferably 10.0 parts by mass or less, more preferably 6.0 parts by mass or less.

The rubber composition preferably contains stearic acid.

The amount of stearic acid per 100 parts by mass of the rubber component in the rubber composition is preferably 0.5 parts by mass or more, more preferably 1.5 parts by mass or more, still more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The rubber composition preferably contains zinc oxide.

The amount of zinc oxide per 100 parts by mass of the rubber component in the rubber composition is preferably 0.5 parts by mass or more, more preferably 1.5 parts by mass or more, still more preferably 2.0 parts by mass or more, further preferably 2.2 parts by mass or more, while it is preferably 6.0 parts by mass or less, more preferably 4.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The rubber composition may contain wax.

The amount of wax per 100 parts by mass of the rubber component in the rubber composition is preferably 0.5 parts by mass or more, more preferably 1.5 parts by mass or more, still more preferably 1.6 parts by mass or more, while it is preferably 8.0 parts by mass or less, more preferably 5.0 parts by mass or less.

The wax is not limited. Any wax usually used in the tire industry may be suitably used. Examples include mineral wax and plant-derived wax. The term "mineral wax" refers to wax derived from mineral resources such as petroleum or natural gas. The term "plant-derived wax" refers to wax derived from natural resources such as plants. Mineral wax is preferred among these. Examples of plant-derived wax include rice wax, carnauba wax, and candelilla wax. Examples of mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, etc. Each wax may be used alone, or two or more of these may be used in combination.

The rubber composition preferably contains sulfur in order to moderately crosslink the polymer chains to obtain good properties.

The rubber composition desirably contains sulfur.

The amount of sulfur per 100 parts by mass of the rubber component in the rubber composition is 1.0 parts by mass or more, preferably 1.35 parts by mass or more, more preferably 2.0 parts by mass or more, still more preferably 2.5 parts by mass or more. The amount of sulfur is preferably 7.0 parts by mass or less, more preferably 5.0 parts by mass or less, still more preferably 4.0 parts by mass or less. When the amount is within the range indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

The rubber composition preferably contains vulcanization accelerators.

The amount of vulcanization accelerators in the rubber composition is not limited and may be freely determined according to the desired curing rate and crosslink density. Still, the amount per 100 parts by mass of the rubber component is preferably 0.5 parts by mass or more, more preferably 0.8 parts by mass or more, still more preferably 1.0 parts by mass or more. The upper limit is preferably 8.0 parts by mass or less, more preferably 6.0 parts by mass or less, still more preferably 5.0 parts by mass or less, further preferably 4.6 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Sulfenamide vulcanization accelerators, guanidine vulcanization accelerators, and benzothiazole vulcanization accelerators are preferred among these.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants, etc.) may be derived from carbon dioxide in the air. The materials may be obtained from carbon dioxide by directly converting carbon dioxide or by synthesizing methane from carbon dioxide through methanation and then converting the methane.

The rubber composition can be produced by, for example, kneading the above-described components using a rubber mixing machine such as an open roll mill or a Banbury mixer and then, for example, cross-linking the kneaded mixture to obtain a cross-linked rubber composition.

The kneading conditions are as follows. In a base kneading step of kneading additives other than vulcanizing agents and vulcanization accelerators, the kneading temperature is preferably 50°C or higher, more preferably 80°C or higher, while it is preferably 200°C or lower, more preferably 190°C or lower. The duration of the kneading is preferably 30 seconds or more, more preferably 1 minute or more, while it is preferably 30 minutes or less. In a final kneading step of kneading vulcanizing agents and vulcanization accelerators, the kneading temperature is preferably 20°C or higher, while it is preferably 100°C or lower, more preferably 80°C or lower. The composition obtained after kneading vulcanizing agents and vulcanization accelerators is usually vulcanized by press vulcanization, for example. The vulcanization temperature is preferably 120°C or higher, more preferably 140°C or higher, while it is preferably 200°C or lower, more preferably 180°C or lower.

The rubber composition is usable in tires, footwear soles, floor materials, vibration-proof materials, seismic isolators, butyl frame materials, belts, hoses, packing materials, medical stoppers, and other industrial rubber products. In particular, the rubber composition is preferably used as a rubber composition for tires because of its excellent tire performances such as wet grip performance.

The rubber composition may be used in any tire component. Examples of the tire component include cap treads, sidewalls, base treads, bead apexes, clinch apexes, innerliners, undertreads, breaker toppings, and ply toppings. In particular, the rubber composition is suitable for cap treads because of its excellent wet grip performance, etc.

### <Tire>

The rubber composition is suitable for use in tires. Examples of the tires include pneumatic tires and non-pneumatic tires. Pneumatic tires are preferred among these. In particular, the rubber composition may be suitably used in summer tires, winter tires (e.g., studless tires, snow tires, or studded tires), all-season tires, for example. The tires may be used as tires for passenger vehicles, large passenger vehicles, large SUVs, heavy duty vehicles such as trucks and buses, light trucks, or motorcycles, or as racing tired (high performance tires), for example. The tires are especially suitable for passenger vehicles or light trucks.

The tire is produced using the rubber composition by usual methods. For example, the rubber composition containing the materials, before vulcanization, may be extruded into the shape of a tire component and assembled with other tire components on a tire building machine in a usual manner to build an unvulcanized tire. The unvulcanized tire is heated and pressurized in a vulcanizer, whereby the tire can be produced.

### EXAMPLES

Examples (working examples) which are considered preferable to implement the present invention are described below although the scope of the disclosure is not limited to the examples.

Chemicals used in the production of tires are listed below. If necessary, the chemicals are purified by usual techniques.

### <Synthesis 1 of boronic acid compound-modified silica>

A modified silica having been modified with a phenylboronic acid compound is synthesized via the synthetic route shown in FIG. 1.

Specifically, the modified silica is synthesized by the following method.

A phenylboronic acid compound A is added to a solution of an amine-modified silica in methanol and stirred at 0°C for one hour and then stirred overnight at room temperature. Subsequently, the solution is cooled to 0°C again, and sodium borohydride (NaBH₄) is gradually added thereto and then stirred at room temperature for four hours. The stirred mixture is subjected to suction filtration to collect a filtrate. The filtrate is dried under reduced pressure for one hour, whereby a boronic acid compound-modified silica is obtained.

FIGS. 2A and 2B show ¹³C-NMR spectra of an intermediate product and a synthetic product in the synthesis (FIG. 2A: an intermediate product, FIG. 2B: a synthetic product). In FIG. 2, S is a spinning side band, and other peaks can be attributed as shown in the figure. The peak 4 in the spectrum of the intermediate almost completely disappears in the spectrum of the synthetic product. This confirms that the intermediate is reduced by sodium borohydride (NaBH₄), thereby synthesizing the target product.

In FIG. 2, Si denotes silica.

The amine-modified silica and the boronic acid compound-modified silica as a synthetic product are subjected to thermogravimetric analysis (TGA) with TGA Q500 available from TA Instruments. FIG. 3 shows the result of the TGA. The result in FIG. 3 demonstrates that the amount of the boronic acid compound added in the boronic acid compound-modified silica is about 0.26 mmol/g.

### <Synthesis 2 of boronic acid compound-modified silica>

The modified silica 1 having been modified with a phenylboronic acid compound (boronic acid compound-modified silica 1) and the modified silica 2 having been modified with a phenylboronic acid compound (boronic acid compound-modified silica 2) are synthesized via the synthetic route shown in FIG. 8.

Specifically, they are synthesized by the following method.

The phenylboronic acid compound A is added to a solution of an amine-modified silica in methanol and stirred at 0°C for one hour and then stirred overnight at room temperature. Next, the stirred mixture is subjected to suction filtration to collect a filtrate. The filtrate is dried under reduced pressure for one hour, whereby a boronic acid compound-modified silica 1 is obtained.

Further, the boronic acid compound-modified silica 1 is dispersed in methanol and then cooled to 0°C again. Sodium borohydride (NaBH₄) is gradually added to the dispersion and stirred at room temperature for four hours. The stirred mixture is subjected to suction filtration to collect a filtrate. The filtrate is dried under reduced pressure for one hour, whereby a boronic acid compound-modified silica 2 is obtained.

The ¹³C-NMR spectra of the boronic acid compound-modified silica 1 and the boronic acid compound-modified silica 2 in the synthesis correspond to the ¹³C-NMR spectra of the intermediate product and the synthetic product, respectively, in the Synthesis 1 of boronic acid compound-modified silica shown in FIGS. 2A and 2B (FIG. 2A: boronic acid compound-modified silica 1, FIG. 2B: boronic acid compound-modified silica 2). In FIGS. 2A and 2B, S is a spinning side band, and other peaks can be attributed as shown in the figures. The peak 4 in the spectrum of the boronic acid compound-modified silica 1 almost completely disappears in the spectrum of the boronic acid compound-modified silica 2. This confirms that the boronic acid compound-modified silica 1 is reduced by sodium borohydride (NaBH₄), thereby synthesizing the boronic acid compound-modified silica 2.

In FIGS. 2A and 2B, Si denotes silica.

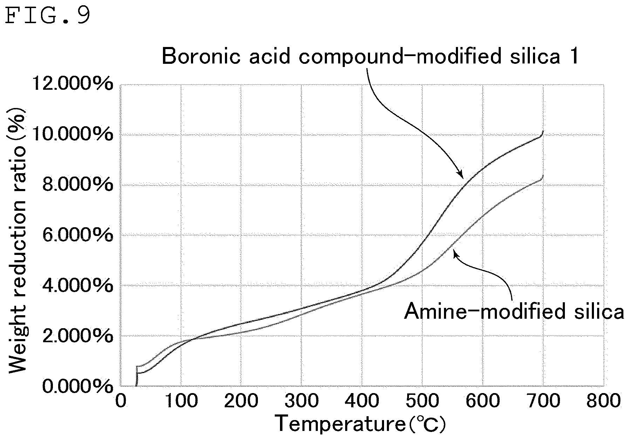

The amine-modified silica and the boronic acid compound-modified silica 1 are subjected to thermogravimetric analysis (TGA) with TGA Q500 available from TA Instruments. FIG. 9 shows the result of the TGA. The result in FIG. 9 demonstrates that the amount of the boronic acid compound added in the boronic acid compound-modified silica 1 is about 0.2 mmol/g.

It can be understood from the above that a modified silica having been modified with a boronic acid compound (boronic acid compound-modified silica) can be synthesized.

When the boronic acid compound-modified silica is repeatedly dried at room temperature and normal pressure to a constant weight and is immersed in water to be wet with water, reversibly, trimolecular dehydration condensation may occur to cause generation of boroxine (boroxine crosslinking) and, upon being in contact with water, the generated boroxine crosslinks may be decomposed. Thus, the boronic acid compound-modified silica is believed to exhibit a reversible change with water in the physical properties.

### <Synthesis of phenylboronic acid compound>

The phenylboronic acid compound C (a phenylboronic acid compound represented by the formula (2)) is synthesized via the synthetic route shown in FIG. 4.

Specifically, the phenylboronic acid compound C is synthesized by the following method.

The method involves reacting the phenylboronic acid compound B with an amine compound in methanol at room temperature overnight, reduction with sodium borohydride (NaBH₄), and removing tert-butoxy carbonyl group (Boc) protection with hydrochloric acid (HCl), whereby the phenylboronic acid compound C is synthesized.

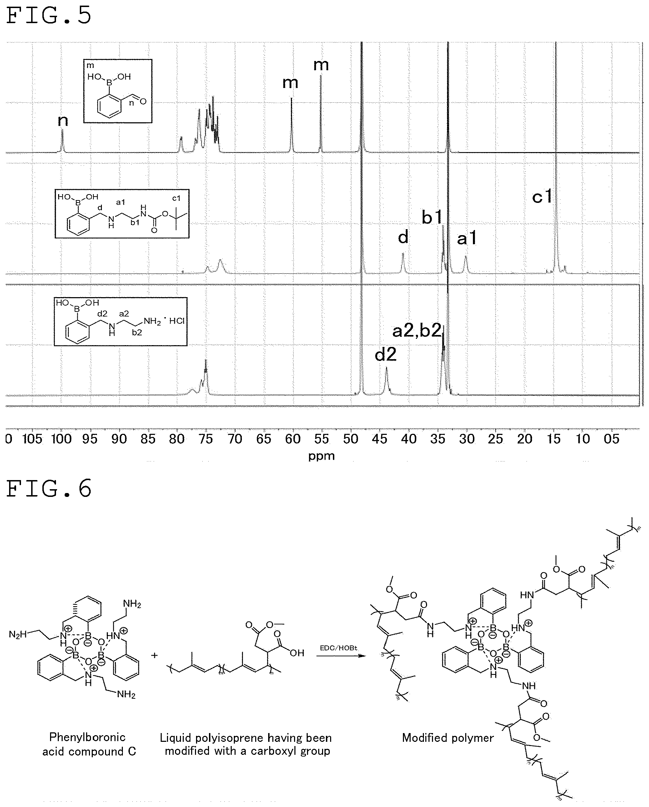

The ¹H-NMR spectrum of a synthetic product shown in FIG. 5 indicates the synthesis of the phenylboronic acid compound C (a phenylboronic acid compound represented by the formula (2)).

### <Synthesis of modified polymer>

A modified polymer (a modified polymer having been modified with a phenylboronic acid compound represented by the formula (2)) is synthesized via the synthetic route shown in FIG. 6.

Specifically, the modified polymer is synthesized by the following method.

### (Synthesis of modified polymer)

A liquid polyisoprene having been modified with a carboxyl group and the phenylboronic acid compound C are fed in chloroform. Then, dehydration condensation is allowed to proceed using EDC/HOBt to obtain a modified polymer. The modified polymer is purified by washing with methanol.

The IR spectra and ¹H-NMR spectra in FIG. 7 indicate that the phenylboronic acid compound C (phenylboronic acid compound represented by the formula (2)), a liquid polyisoprene having been modified with a carboxyl group, and a liquid polyisoprene (modified polymer) having been modified with the phenylboronic acid compound C are synthesized.

### <Synthesis of amine-modified liquid butadiene polymer>

A liquid butadiene polymer is dissolved in dichloromethane (CH₂Cl₂), and 2-aminoethanethiol and a 2,2-dimethoxy-2-phenylacetophenone as an initiator are added to the solution. The mixture is exposed to a lamp light (365 nm, 250 W) in nitrogen atmosphere for two hours. Thereafter, the lamp is turned off, and the reaction solution is washed with brine several times to remove unreacted 2-aminoethanethiol. The resulting solution is subjected to centrifugal drying, whereby a viscous liquid target product (amine-modified liquid butadiene polymer) is obtained.

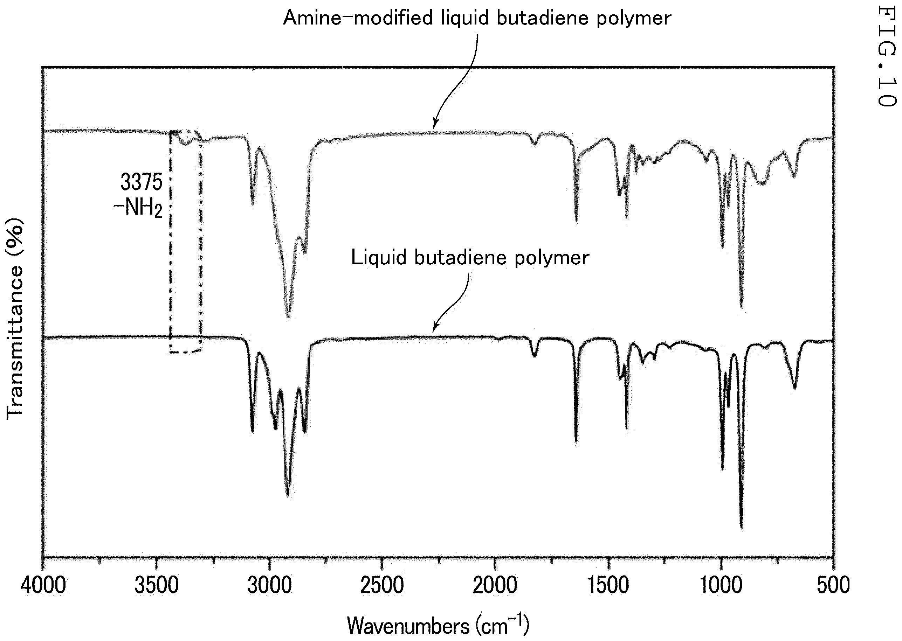

The IR spectrum shown in FIG. 10 indicates that an amine-modified liquid butadiene polymer is synthesized.

The materials below are used in the syntheses of the boronic acid compound-modified silica shown in FIG. 1, the boronic acid compound-modified silica 1 and the boronic acid compound-modified silica 2 shown in FIG. 8, the phenylboronic acid compound C shown in FIG. 4, the modified polymer shown in FIG. 6, and the amine-modified liquid butadiene polymer.
Amine-modified silica: 3-aminopropyl silica gel available from Tokyo Chemical Industry Co., Ltd., loading: 0.6 to 1.3 mmol/g
Phenylboronic acid compound A: 2-formylphenylboronic acid available from FUJIFILM Wako Pure Chemical Corporation
Sodium borohydride (NaBH₄): a product of FUJIFILM Wako Pure Chemical Corporation
Methanol: a product of FUJIFILM Wako Pure Chemical Corporation
Phenylboronic acid compound B: a product of Boron Molecular Pty Limited
Amine compound: a product of Combi-Blocks
Hydrochloric acid (HCl): a product of FUJIFILM Wako Pure Chemical Corporation
Liquid polyisoprene having been modified with carboxyl group: LIR-410 available from Kuraray, molecular weight: 30000, number of carboxyl groups per molecule: 10, glass transition temperature: -59°C
EDC: 1-(3-dimethylaminopropyl)-3-ethylcarbodiimide available from Tokyo Chemical Industry Co., Ltd.
HOBt: 1-hydroxybenzotriazol available from Tokyo Chemical Industry Co., Ltd.
Liquid butadiene polymer: L-BR-361 available from Kuraray
Dichloromethane (CH₂Cl₂): a product of FUJIFILM Wako Pure Chemical Corporation
2-Aminoethanethiol: a product of Tokyo Chemical Industry Co., Ltd.
2,2-Dimethoxy-2-phenylacetophenone: a product of FUJIFILM Wako Pure Chemical Corporation

### <Production of test tire>

According to each formulation in Table 1, 2, or 3, the materials other than sulfur and vulcanization accelerators are kneaded to obtain a kneaded mixture.

To the kneaded mixture are added the sulfur and the vulcanization accelerators according to the formulation in Table 1, 2, or 3, and they are kneaded at 70°C for eight minutes to obtain an unvulcanized rubber composition.

The unvulcanized rubber composition is extruded and molded into the shape of a cap layer. The cap layer is assembled with other tire components on a tire building machine to build an unvulcanized tire. The unvulcanized tire is press-vulcanized at 170°C for 20 minutes, thereby obtaining a test tire (size 195/65R15).

Test tires prepared using the compositions according to the formulations varied as shown in Tables 1 to 3 are simulated. Tables 1 to 3 show the results calculated as described in the evaluation methods below.

The reference comparative examples are as follows.
Table 1: Comparative Example 1-1
Table 2: Comparative Example 2-1
Table 3: Comparative Example 3-1

SBR: HPR850 (modified SBR, styrene content: 27.5% by mass, vinyl bond content: 59.0% by mass) available from JSR Corporation
BR: BR730 (cis content: 95% by mass) available from JSR Corporation
NR: TSR20
Carbon black: DIABLACK I (N220, N₂SA 114 m²/g) available from Mitsubishi Chemical Corporation
Silica: ULTRASIL VN3 (N₂SA 175 m²/g) available from Evonik
Silane coupling agent: Si266 (bis(3-triethoxysilylpropyl)disulfide) available from Evonik
Boronic acid compound-modified silica: synthesized in the "Synthesis 1 of boronic acid compound-modified silica"
Boronic acid compound-modified silica 1: synthesized in the "Synthesis 2 of boronic acid compound-modified silica"
Boronic acid compound-modified silica 2: synthesized in the "Synthesis 2 of boronic acid compound-modified silica"
Modified polymer: synthesized in the "Synthesis of modified polymer"
Amine-modified liquid butadiene polymer: synthesized in the "Synthesis of amine-modified liquid butadiene polymer"
Phenylboronic acid compound: 2-formylphenylboronic acid available from FUJIFILM Wako Pure Chemical Corporation
Zinc oxide: zinc oxide #1 available from Mitsui Mining & Smelting Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid "TSUBAKI" available from NOF Corporation
Wax: Ozoace 0355 available from Nippon Seiro Co., Ltd.
Sulfur: powdered sulfur (oil content of 50) available from Tsurumi Chemical Industry Co., Ltd.
Vulcanization accelerator 1: NOCCELER D (diphenylguanidine) available from Ouchi Shinko Chemical Industrial Co., Ltd.
Vulcanization accelerator 2: NOCCELER NS (N-tert-butyl-2-benzothiazolylsulfenamide (TBBS)) available from Ouchi Shinko Chemical Industrial Co., Ltd.

### <Wet grip performance>

The test tire is mounted on every wheel of a front-engine, front-wheel-drive car of 2,000 cc displacement made in Japan. Twenty test drivers independently drive the car 10 rounds on a course with a wet road surface, and the drivers rate the braking performance in a wet road surface region on a scale of one to five. A higher rating indicates better braking performance. The sum of the ratings of the twenty drivers is calculated and expressed as an index relative to the sum in the reference comparative example taken as 100. A higher index indicates better wet grip performance.

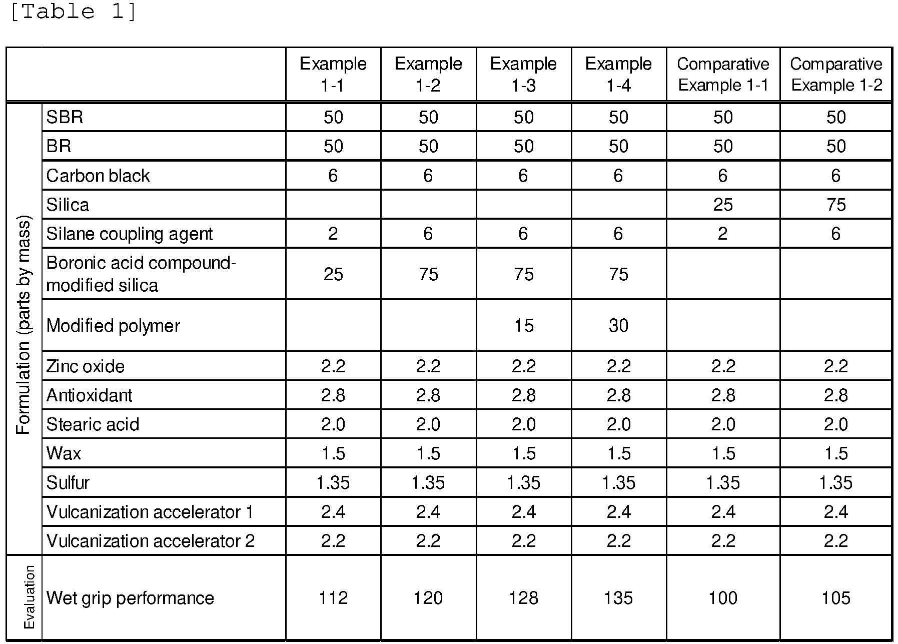

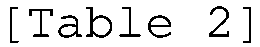

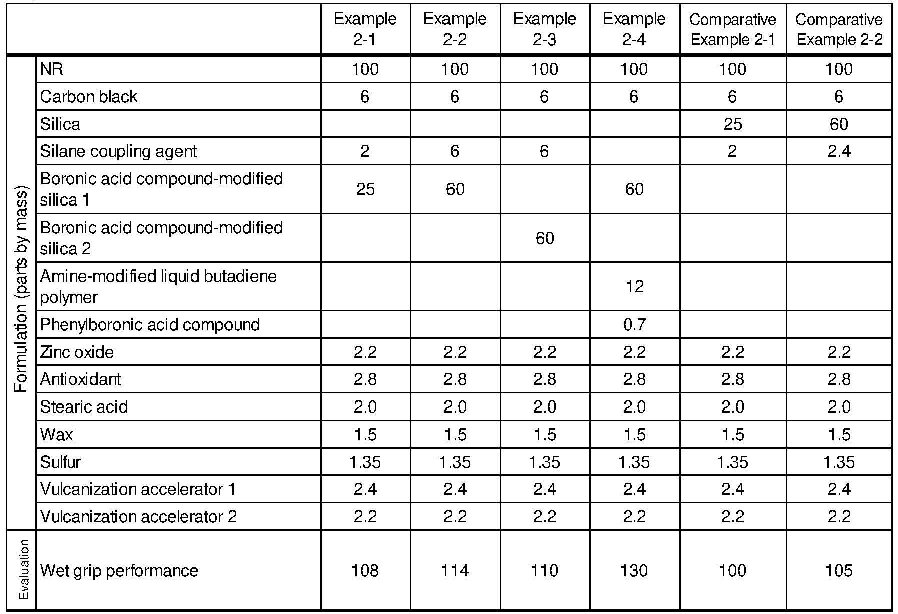

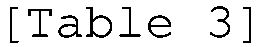

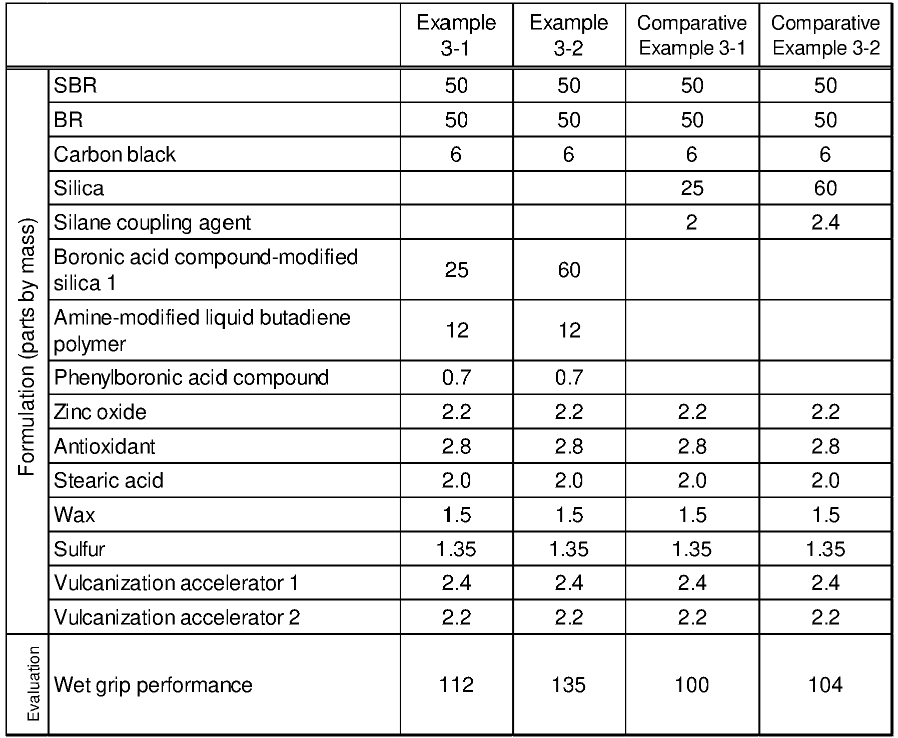

Exemplary embodiments of the present invention include the following.

Embodiment 1. A modified silica having been modified with a boronic acid compound.

Embodiment 2. A rubber composition containing the modified silica according to Embodiment 1 and a rubber component.

Embodiment 3. The rubber composition according to Embodiment 2,
wherein the rubber component includes a modified rubber having been modified with a boronic acid compound.

Embodiment 4. The rubber composition according to Embodiment 2 or 3, further containing a modified polymer having been modified with a boronic acid compound.

Embodiment 5. The rubber composition according to any combination with any one of Embodiments 2 to 4,
wherein the rubber component includes at least one selected from the group consisting of an isoprene-based rubber, polybutadiene rubber, and styrene-butadiene rubber.

Embodiment 6. The rubber composition according to Embodiment 5,
wherein the styrene-butadiene rubber has a styrene content of 5 to 60% by mass.

Embodiment 7. The rubber composition according to Embodiment 5 or 6,
wherein the styrene-butadiene rubber has a vinyl bond content of 3 to 70% by mass.

Embodiment 8. The rubber composition according to any combination with any one of Embodiments 5 to 7,
wherein the polybutadiene rubber has a cis content of 90% by mass or higher.

Embodiment 9. The rubber composition according to any combination with any one of Embodiments 2 to 8,
wherein the rubber composition contains the modified silica in an amount of 5 to 100 parts by mass per 100 parts by mass of the rubber component.

Embodiment 10. The rubber composition according to any combination with any one of Embodiments 2 to 9, further containing carbon black in an amount of 1 to 50 parts by mass per 100 parts by mass of the rubber component.

Embodiment 11. The rubber composition according to Embodiment 10,
wherein the carbon black has a nitrogen adsorption specific surface area of 5 to 200 m²/g.

Embodiment 12. The rubber composition according to any combination with any one of Embodiments 4 to 11,
wherein the rubber composition contains the modified polymer in an amount of 1 to 50 parts by mass per 100 parts by mass of the rubber component.

Embodiment 13. The rubber composition according to any combination with any one of Embodiments 2 to 12, further containing sulfur in an amount of 1.0 to 7.0 parts by mass per 100 parts by mass of the rubber component.

Embodiment 14. A tire, including a tire component containing the rubber composition according to any combination with any one of Embodiments 2 to 13.

## Claims

1. A modified silica having been modified with a boronic acid compound.

2. A rubber composition comprising the modified silica according to claim 1 and a rubber component.

3. The rubber composition according to claim 2,
wherein the rubber component includes a modified rubber having been modified with a boronic acid compound.

4. The rubber composition according to claim 2 or 3, further comprising a modified polymer having been modified with a boronic acid compound.

5. The rubber composition according to any one of claims 2 to 4,
wherein the rubber component includes at least one selected from the group consisting of an isoprene-based rubber, polybutadiene rubber, and styrene-butadiene rubber.

6. The rubber composition according to claim 5,
wherein the styrene-butadiene rubber has a styrene content of 5 to 60% by mass.

7. The rubber composition according to claim 5 or 6,
wherein the styrene-butadiene rubber has a vinyl bond content of 3 to 70% by mass.

8. The rubber composition according to any one of claims 5 to 7,
wherein the polybutadiene rubber has a cis content of 90% by mass or higher.

9. The rubber composition according to any one of claims 2 to 8,
wherein the rubber composition contains the modified silica in an amount of 5 to 100 parts by mass per 100 parts by mass of the rubber component.

10. The rubber composition according to any one of claims 2 to 9, further comprising carbon black in an amount of 1 to 50 parts by mass per 100 parts by mass of the rubber component.

11. The rubber composition according to claim 10,
wherein the carbon black has a nitrogen adsorption specific surface area of 5 to 200 m²/g.

12. The rubber composition according to any one of claims 4 to 11,
wherein the rubber composition contains the modified polymer in an amount of 1 to 50 parts by mass per 100 parts by mass of the rubber component.

13. The rubber composition according to any one of claims 2 to 12, further comprising sulfur in an amount of 1.0 to 7.0 parts by mass per 100 parts by mass of the rubber component.

14. A tire, comprising a tire component containing the rubber composition according to any one of claims 2 to 13.
